Europäisches Patentamt

European Patent Office

Office européen des brevets

(19)

(11) Publication number: **0 309 989**
**A2**

# EUROPEAN PATENT APPLICATION

(12)

(21) Application number: **88115883.6**

(22) Date of filing: **27.09.88**

(51) Int. Cl.⁴: **G06F 13/42**

(30) Priority: **28.09.87 US 102065**

(43) Date of publication of application:
**05.04.89 Bulletin 89/14**

(84) Designated Contracting States:
**AT BE CH DE ES FR GB GR IT LI LU NL SE**

(71) Applicant: **Compaq Computer Corporation**
**20555 FM 149**
**Houston Texas 77070(US)**

(72) Inventor: **Culley, Paul R.**
**13010 Marron Drive**
**Cypress, Texas 77429(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

(54) **High speed microprocessor with one-shot timer for 8-bit i/o accesses.**

(57) A method and apparatus are disclosed for promoting the proper synchronization of a computer system utilizing 8-bit I/O devices. Logic circuitry identifies the end of each 8-bit I/O cycle. A timer causes a a 1.5 microsecond timeout after the end of each such cycle. If a subsequent I/O cycle begins before the end of the timeout, logic circuitry adds wait states until the end of the timeout.

*FIG I*

EP 0 309 989 A2

Xerox Copy Centre

## HIGH SPEED MICROPROCESSOR WITH ONE-SHOT TIMER FOR 8-BIT I/O ACCESSES

This invention relates to apparatus for enabling a relatively high-speed microcomputer system which includes both an 8- and a 16-bit system bus to utilize in a more effective manner slower-speed input/output (I/O) devices in conjunction with the 8-bit bus.

The timing of the operations of the various components in a microcomputer system must be suitably matched, as is well known to those of ordinary skill in the art of designing and building such systems. An oversimplified analogy is a conventional automobile engine. The various engine components' operations must be properly synchronized so that each cylinder receives its fuel-air mixture in turn, a spark is generated within that cylinder to ignite the mixture, and the piston delivers its power stroke, all in a smooth sequence.

Likewise, the synchronization of a microcomputer system requires attention by the system designer(s). A principal need for proper timing arises in connection with the exchange of signals between the various system components.

For example, as those of ordinary skill are aware, components such as the central processing unit (CPU), system memory, I/O devices (e.g., disk drives, printers, user terminals, and the like), and other such components typically communicate with each other by "broadcasting" signals on one or more signal buses. (As used in the art, the term "bus" generally means an electrical connection resembling a telephone party line in some respects, to which a number of signal-gnerating and -processing components are connected.)

Each such signal broadcast on a "party line" in this manner by a component is typically coded with an identifier designating the other component which is the intended recipient of the signal. A component connected to a given signal bus in effect "listens" electrically to that bus for signals encoded with the component's designator. The identifier for a given component is often referred to as the component's address on the signal bus, although strictly speaking the component can usually be physically attached to the bus at any convenient location.

As an example, the CPU might perform a write-to-memory operation by broadcasting a signal encoded with the designator for the memory device to be written to and the actual datum to be written. All memory devices would "hear" the signal, but one in particular would recognize its own designator and save the accompanying datum in its electronic storage circuits. In like manner, the CPU might later perform a read-from-memory operation by signalling the memory device to send a return signal back to the CPU, the return signal being encoded by the memory device with the previously stored datum.

Many microcomputer systems have been designed using the relatively slow Intel 8086/8088 family of microprocessors, frequently in accordance with the industry standard exemplified by various Compaq computers manufactured and distributed by the assignee of this application. The 8088 CPU commonly operates at a speed of 4.77 MHz, and computer systems based on the 8088 or 8086 CPU ordinarily have an 8-bit system bus.

(The bit size of a system bus refers to the "width" of the bus's electrrical data path. An 8-bit bus allows eight separate electrical signals, each representing either a 1 or a 0 depending on whether the voltage is on or off, to be transmitted simultaneously; it is roughly analogous to an 8-lane highway. Generally speaking, a 16-bit bus can handle higher-volume information flows than can an 8-bit bus.)

Later designs of CPUs in that family, such as various versions of the Intel 80386 can operate at speeds of 12 MHz, 16 MHz, or 20 MHz. (MHz is an abbreviation for mega-Herz, or millions of cycles per second.) Computers based on these later CPUs typically include both an 8-bit and a 16-bit system bus in order to maintain compatability with older system designs.

A number of I/O devices and other peripheral devices were originally designed for a relatively slow microcomputer system having an 8-bit system bus. Such devices needed only enough speed to keep up with the relatively slow CPUs of that time. Speed limitations associated with the devices generally did not cause bottlenecks with respect to CPU speeds. For example, software which ordered the CPU to direct two write operations in succession to the same device usually posed no difficulty: the CPU's speed in executing the software instructions was not fast enough to cause a problem.

Use of such 8-bit devices with a faster CPU can lead to synchronization problems. In the class of microcomputer systems exemplified by the Compaq Deskpro 286, for example, using the Intel 80286 CPU, it was found that the CPU was able, in some instances, to go fast enough to exceed some of these I/O device limitations. This is roughly analogous to a person giving dictation over the telephone party line to another person who transcribes it: the transcriber may be able to handle a relatively slow talker satisfactorily, but cannot keep up with a fast talker. In the same manner, an older I/O device, designed for a slower CPU, may not be able to keep up with a faster CPU.

In the past, this problem has been alleviated by changing the applications software which controlled the CPU to ensure that I/O signals generated by the CPU under the control of the software did not outrun the devices in question. In software for the Deskpro 286-class products, for example, this was typically done by inserting additional instructions (such as JMP instructions) between the offending I/O operations. With a JMP instruction in particular, the CPU was forced to discard the contents of its prefetch queue and refetch the next instruction. This took significant time (one to two microseconds) and provided adequate delay in between the I/O cycles.

This is not a desirable general solution, however. Additional delay would need to be built into the software to prevent a faster, 80386 CPU from outrunning the I/O device. The software in question would consequently run that much slower on a slower CPU. This problem can be alleviated by having multiple versions of each software program, but the attendant maintenance burdens make software vendors normally reluctant to do so. In addition, a change to one area of a program might result in unexpected bugs in other areas.

The outrunning problem would be particularly exacerbated in an 80386 CPU which utilized a posted-write memory cache system such as the Intel 82385. In a posted-write cache system, the CPU treats a write operation as ended when its interaction with the cache controller is ended; the cache controller actually completes the write operation. Numerous JMP instructions would be required to prevent outrunning in such an environment.

Hardware-based solutions can include disabling or stopping the system bus after 8-bit I/O cycles, or after all I/O cycles (both 8- and 16-bit), by means of additional wait states or hold cycles. In systems based on the Intel 80386 CPU, operating-system software can be designed to trap I/O cycles and artificially add the required delay. Either option, of course, leads to a corresponding cost in processing time.

In accordance with the present invention, there is provided logic circuitry to identify the end of each 8-bit I/O cycle; a timer to time out a 1.5 microsecond timeout after the end of each such cycle; and logic circuitry which, if the timer has not signalled the end of the timeout when a subsequent I/O cycle begins, adds wait states until the timeout has expired.

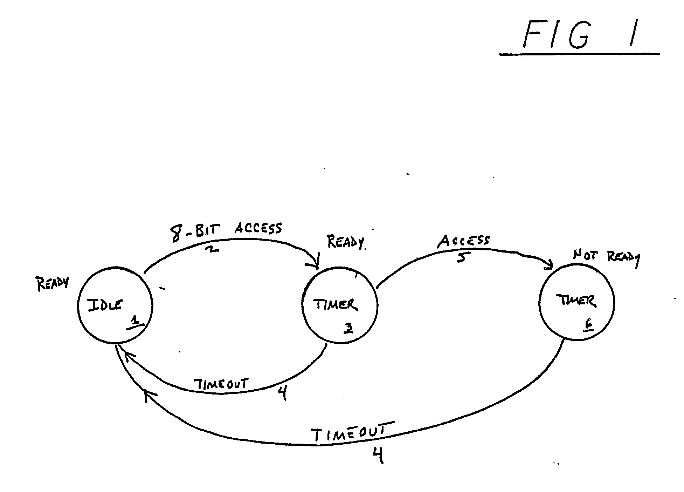

Figure 1 is a state-machine diagram describing logic circuitry for implementing the invention.

Referring to Fig. 1, the initial state of the logic circuitry is idle, as represented by a state circle 1. Following an 8-bit I/O access, indicated by the event arrow 2, a timer is started as indicated by state circle 3.

When the timer times out, as indicated by the event arrow 4, the logic returns to its idle state. If a second I/O access (8-bit or otherwise) is initiated prior to the timeout, as indicated by event arrow 5, wait states are added to delay the I/O cycle until the timer times out.

The timer does not stop the processor until and unless another I/O access is attempted. Thus, memory operations (as distinct from I/O operations) can continue as normal during the timer period as long as a second I/O access does not take place during that time. Only an 8-bit I/O cycle starts the timeout, but any type of I/O cycle that follows will be held up until the timeout expires.

It has been found that a timeout of 1.5 microseconds will produce satisfactory results for nearly all 8-bit I/O devices not utilizing their own timing control mechanisms (e.g., handshaking or other such signals). A longer timeout will of course suffice, but unnecessary delays are of course undesirable. A shorter timeout may produce satisfactory results for some devices, but a timeout of 1.0 microseconds is likely to be insufficient for at least some 8-bit I/O devices.

It will be appreciated by those skilled in the art having the benefit of this disclosure that this invention as claimed below is believed to be capable of application in other situations. Accordingly, this description is to be construed as illustrative only and as for the purpose of teaching those skilled in the art the manner of carrying out the invention.

It is also to be understood that various modifications and changes may be made without departing from the spirit and scope of the invention as set forth below in the claims. It is intended that the following claims be interpreted to embrace all such modifications and changes.

## Claims

1. A method of synchronizing the operations of a computer system including a central processing unit (CPU) and utilizing one or more 8-bit input/output (I/O) devices, comprising the steps of:

starting a timer to generate a timeout upon an attempt by the CPU to access an 8-bit I/O device; and

upon a second attempt by the CPU to access an I/O device prior to expiration of the timeout, inserting wait states to delay the second attempt.

# FIG 1